# EUROPÄISCHE PATENTANMELDUNG

(11) **EP 3 715 063 A1**
(43) Veröffentlichungstag der Anmeldung: **30.09.2020**
(21) Anmeldenummer: 20154266.9
(22) Anmeldetag: 29.01.2020
(51) Int. Cl.: B25J 9/16, E01C 19/52, E04G 21/22

(54) **MUSTERBILDUNGSVERFAHREN**

(30) Priorität: 18.03.2019 DE 102019106834
(71) Anmelder: Kronimus Aktiengesellschaft, 76473 Iffezheim (DE)
(72) Erfinder: Kronimus, Martin, 76530 Baden Baden (DE)
(74) Vertreter: Otten, Roth, Dobler & Partner mbB Patentanwälte

(57) **Zusammenfassung**

Die Erfindung betrifft ein Musterbildungsverfahren (101), durch welches Pflastersteine (P) aus maschinell produzierten Ursprungsteinlagen (102, 103) zu maschinell verlegbaren Fertigsteinlagen (104, 105) umgesetzt werden, wobei als Ursprungssteinlagen (102, 103) nacheinander mehrere Ursprungssteinlagen (102) eines ersten Typs (106) und nacheinander mehrere Ursprungssteinlagen (103) eines zweiten Typs (107) oder nacheinander mehrere Ursprungssteinlagen eines ersten Typs und nacheinander mehrere Ursprungssteinlagen eines zweiten Typs und nacheinander mehrere Ursprungssteinlagen eines dritten Typs in einen Zugriffsbereich (108) eines Manipulators (M) gebracht werden.

## Beschreibung

Die Erfindung betrifft ein Musterbildungsverfahren gemäß dem Oberbegriff des Anspruchs 1, durch welches Pflastersteine aus maschinell produzierten Ursprungsteinlagen zu maschinell verlegbaren Fertigsteinlagen umgesetzt werden.

Aus der EP 3 009 567 B1 ist ein Verfahren zur Modifikation einer ersten Verlegeeinheit und einer zweiten Verlegeeinheit bekannt, wobei sich die beiden unmodifizierten Verlegeeinheiten bei gleichen Gesamtabmessungen hinsichtlich ihrer Anzahl von Einzelsteinen und hinsichtlich ihrer Anzahl von Steinreihen voneinander unterscheiden, wobei die erste und die zweite Verlegeeinheit aus einer ersten und einer zweiten Steinform hergestellt werden, wobei die beiden unmodifizierten Verlegeeinheiten unter Veränderung der Anzahl der Einzelsteine und unter Veränderung der Anzahl der Steinreihen vor dem Palettieren von wenigstens einem Industrieroboter modifiziert werden, wobei der wenigstens eine Industrieroboter aus mehreren benachbarten Steinreihen der ersten Verlegeeinheit und mehreren benachbarten Steinreihen der zweiten Verlegeeinheit eine erste gemischte Verlegeeinheit zusammensetzt, wobei der wenigstens eine Industrieroboter aus den verbleibenden Steinreihen der ersten Verlegeeinheit und den verbleibenden Steinreihen der zweiten Verlegeeinheit eine zweite gemischte Verlegeeinheit zusammensetzt und dass sich die Gesamtabmessungen der ersten und der zweiten Verlegeeinheit und die Gesamtabmessungen der ersten gemischten Verlegeeinheit und der zweiten gemischten Verlegeeinheit entsprechen.

Der Erfindung liegt die Aufgabe zugrunde, ein Musterbildungsverfahren vorzuschlagen, durch welches sich aus wenigstens zwei unterschiedlichen Ursprungssteinlagen industriell Fertigsteinlagen wenigstens eines Typs und insbesondere wenigstens zweier Typen herstellen lassen, welche Muster aufweisen, die nicht nur ein Umsetzen von rechteckigen Steinpaketen erfordern.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Das erfindungsgemäße Musterbildungsverfahren, durch welches Pflastersteine aus maschinell produzierten Ursprungsteinlagen zu maschinell verlegbaren Fertigsteinlagen umgesetzt werden sieht vor,
- dass als Ursprungssteinlagen nacheinander mehrere Ursprungssteinlagen eines ersten Typs und nacheinander mehrere Ursprungssteinlagen eines zweiten Typs oder nacheinander mehrere Ursprungssteinlagen eines ersten Typs und nacheinander mehrere Ursprungssteinlagen eines zweiten Typs und nacheinander mehrere Ursprungssteinlagen eines dritten Typs in einen Zugriffsbereich eines Manipulators gebracht werden,
- dass jede Ursprungssteinlage jeweils erste Pflastersteine mit einer ersten Trittflächengröße und jeweils zweite Pflastersteine mit einer zweiten Trittflächengrößen umfasst,
- dass sich die Pflastersteine der Ursprungssteinlagen des ersten Typs und die Pflastersteine der Ursprungssteinlagen des zweiten Typs bezüglich ihrer Trittflächenstruktur und/oder bezüglich ihrer Trittflächenfarbe voneinander unterscheiden oder dass sich die Pflastersteine der Ursprungssteinlagen des ersten Typs und die Pflastersteine der Ursprungssteinlagen des zweiten Typs und die Pflastersteine der Ursprungssteinlagen des dritten Typs sich bezüglich ihrer Trittflächenstruktur und/oder bezüglich ihrer Trittflächenfarbe voneinander unterscheiden,
- dass der Manipulator entsprechend einem Umsetz- und Musterbildungsauftrag von einem Umsetz- und Musterbildungsprogramm derart gesteuert wird, dass von seinem Greifer in dem Zugriffsbereich nacheinander sämtliche Pflastersteine der Ursprungssteinlagen einzeln oder zu mehreren entnommen werden und auf einer ebenfalls in dem Zugriffsbereich des Manipulators liegenden Ablagefläche einzeln oder zu mehreren abgesetzt werden und zu Fertigsteinlagen eines ersten Musters, bei welchem die Fertigsteinlage in jeder Steinreihe Pflastersteine aus wenigstes zwei Ursprungssteinlagen umfasst, oder Fertigsteinlagen eines ersten Musters und eines zweiten Musters, bei welchen die Fertigsteinlagen jeweils in jeder Steinreihe Pflastersteine aus wenigstens zwei Ursprungssteinlagen umfassen, oder zu Fertigsteinlagen eines ersten Musters und eines zweiten Musters und eines dritten Musters zusammensetzt werden,
- dass dies derart erfolgt, dass jede Fertigsteinlage unabhängig von ihrem Muster aus Pflastersteinen von zwei oder drei Typen von Ursprungssteinlagen hergestellt wird. Hierdurch lassen sich Fertigsteinlagen herstellen, welche ein Erscheinungsbild aufweisen, welches ansonsten nur durch eine aufwendige Handverlegung von Ursprungsteinlagen erreichbar wäre und somit erhebliche Kosteneinsparungen mit sich bringt und somit auch die körperliche Belastung der eine Verlegfläche erstellenden Straßenbauer reduziert.

Weiterhin kann es vorgesehen sein, dass alle Fertigsteinlagen mit derselben Parkettierung hergestellt werden. Hierdurch ist eine einfache Weiterverwendung von nicht vollständig benötigten Fertigsteinlagen zur Ergänzung einer Verlegefläche möglich.

Es kann auch vorgesehen sein, das Musterbildungsverfahren derart auszuführen, dass eine ganzzahlige Zahl von wenigstens drei und maximal zehn Fertigsteinlagen aus einem ganzzahligen Vielfachen von Ursprungssteinlagen des ersten Typs und einem ganzzahligen Vielfachen von Ursprungssteinlagen des zweiten Typs und ganzzahligen Vielfachen von Ursprungssteinlagen des dritten Typs gebildet wird. Hierdurch ist es sicher gestellt, dass die bereitgestellten Ursprungssteinlagen vollständig zu vollständigen Fertigsteinlagen verarbeitet werden können.

Weiterhin kann das Musterbildungsverfahren vorsehen, dass die Fertigsteinlagen nach ihrer Erzeugung derart aufeinander gestapelt werden, dass von dem Manipulator oder einer Stapeleinrichtung auf eine Fertigsteinlage des ersten Musters eine Fertigsteinlage des zweiten Musters oder eine Fertigsteinlage des dritten Musters gelegt wird. Hierdurch kann eine Verlegefläche, bei welcher Fertigsteinlagen unterschiedlicher Muster nebeneinander gelegt werden, durch einfaches Abstapeln der Fertigsteinlagen von einer Palette hergestellt werden.

Das Musterbildungsverfahren kann auch vorsehen, dass die Fertigsteinlagen nach ihrer Erzeugung derart aufeinander gestapelt werden, dass von dem Manipulator oder einer Stapeleinrichtung auf eine Fertigsteinlage des ersten Musters eine Fertigsteinlage des zweiten Musters gelegt wird und dass auf die Fertigsteinlage des zweiten Musters eine Fertigsteinlage des dritten Musters gelegt wird und dass es insbesondere vorgesehen ist, dass dieser Vorgang wenigstens einmal wiederholt wird. Hierdurch kann eine Verlegefläche, bei welcher Fertigsteinlagen unterschiedlicher Muster nebeneinander gelegt werden, durch einfaches Abstapeln der Fertigsteinlagen von einer Palette hergestellt werden.

Weiterhin kenn es durch das Musterbildungsverfahren vorgesehen sein, dass die Fertigsteinlagen von dem Manipulator derart in mehreren Lagen auf der Ablagefläche abgelegt werden, dass diese parallel oder nacheinander zu Fertigsteinlagen eines ersten Musters oder Fertigsteinlagen eines ersten und zweiten Musters oder zu Fertigsteinlagen eines ersten und zweiten und dritten Musters zusammensetzt werden. Hierdurch lassen sich die von einem Manipulator zurückzulegenden Wege für die zu bildenden Muster optimieren.

Es kann bei dem Musterbildungsverfahren auch vorgesehen sein, dass die Ursprungssteinlagen jeweils entweder als Stapel oder als Einzellagen in den Zugriffsbereich des Manipulators gebracht werden. Bei einer Bereitstellung als Stapel kann der Manipulator mehrere Lagen unterbrechungsfrei abarbeiten. Bei einer Bereitstellung von Einzellagen kann auf den Schritt eines vorhergehendes Stapeln der Ursprungssteinlagen verzichtet werden.

Weiterhin kann es bei dem Musterbildungsverfahren vorgesehen sein, dass alle Ursprungssteinlagen hinsichtlich ihrer Parkettierung gleich hergestellt sind. Hierdurch wird die Kompatibilität, welche die unterschiedlichen Typen von Ursprungssteinlagen zueinander aufweisen, erhöht.

Es kann entsprechend dem Musterbildungsverfahren auch vorgesehen sein, dass als Ursprungssteinlagen des ersten Typs und des zweiten Typs und des dritten Typs Ursprungsteinlagen verarbeitet werden, welche sich hinsichtlich ihrer Parkettierung unterscheiden. Hierdurch lassen sich besonders individuelle Fertigsteinlagen bilden, durch welche dann auch besonders individuelle Verlegeflächen hergestellt werden können.

Weiterhin kann es entsprechend dem Musterbildungsverfahren vorgesehen sein, dass die Ablagefläche, auf welcher die Fertigsteinlagen abgelegt werden, zusammen mit einem Sockel des Manipulators bewegt wird. Hierdurch können die Verfahrwege des Manipulators minimiert werden, da dieser nur die Ursprungssteinlagen anfahren muss und die Ablagefläche immer dieselbe Ausrichtung zu dem Manipulator aufweist.

Das Musterbildungsverfahren kann auch vorsehen, dass als weitere Ursprungssteinlagen nacheinander jeweils mehrere Ursprungssteinlagen eines vierten Typs oder eines vierten und fünften Typs oder eines vierten, fünften und sechsten Typs oder eines vierten, fünften, sechsten und siebten Typs oder von mehr als sieben Typen in den Zugriffsbereich des Manipulators gebracht werden. Hierdurch lassen sich besonders individuelle Fertigsteinlagen bilden, durch welche dann auch besonders individuelle Verlegeflächen hergestellt werden können.

Schließlich kann das Musterbildungsverfahren vorsehen, dass alle Ursprungssteinlagen jeweils Pflastersteine unterschiedlicher Trittflächengrößen umfassen, wobei sich die Pflastersteine der Ursprungssteinlagen aller Typen bezüglich ihrer Trittflächenstruktur und/oder bezüglich ihrer Trittflächenfarbe voneinander unterscheiden. Hierdurch lassen sich besonders individuelle Fertigsteinlagen bilden, durch welche dann auch besonders individuelle Verlegeflächen hergestellt werden können.

Weitere Einzelheiten der Erfindung werden in der Zeichnung anhand von schematisch dargestellten Ausführungsbeispielen beschrieben.

Hierbei zeigt:
Figur 1a, 1b: eine abstrakte Darstellung eines ersten Musterbildungsverfahrens und
Figur 2a, 2b: eine abstrakte Darstellung eines zweiten Musterbildungsverfahrens.

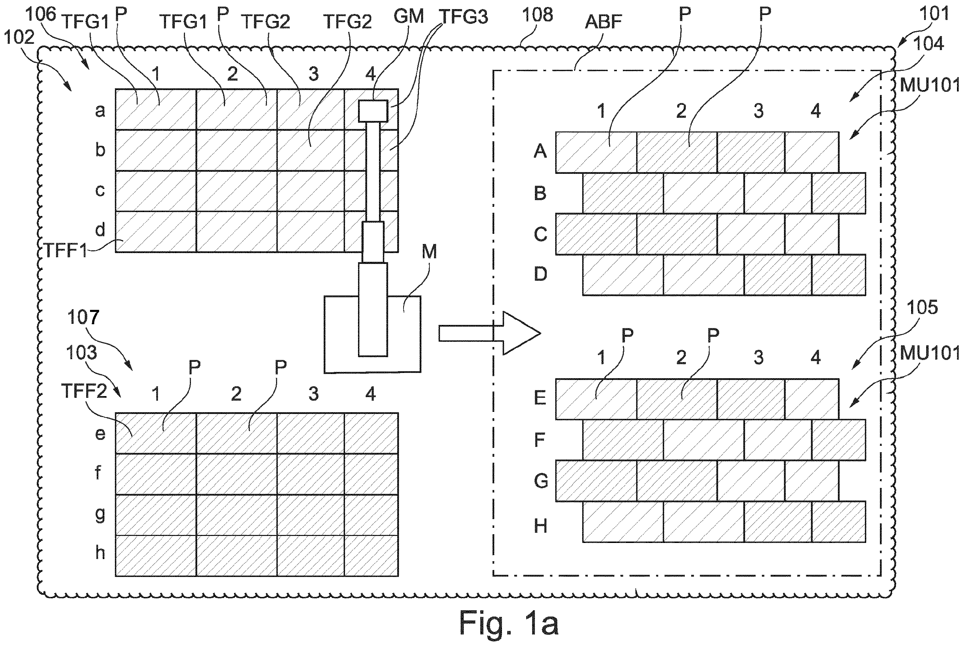

Die Figur 1a zeigt in abstrakter Darstellung ein erstes Musterbildungsverfahren 101. Auf der linken Seite der Figur 1a sind zwei maschinell produzierte Ursprungssteinlagen 102, 103 gezeigt. Pflastersteine P aus diesen maschinell produzierten Ursprungsteinlagen 102, 103 werden zu auf der rechten Seite der Figur 1a gezeigten, maschinell verlegbaren Fertigsteinlagen 104, 105 umgesetzt. Diese Umsetzarbeit wird durch einen schematisch dargestellten Manipulator M ausgeführt. Als Ursprungssteinlagen 102, 103 werden zur Herstellung einer Vielzahl von Fertigsteinlagen 104, 105 nacheinander mehrere Ursprungssteinlagen 102 eines ersten Typs 106 und nacheinander mehrere Ursprungssteinlagen 103 eines zweiten Typs 107 in einen Zugriffsbereich 108 des Manipulators M gebracht. Jede der Ursprungssteinlagen 102, 103 umfasst jeweils erste Pflastersteine z.B. a1, a2 mit einer ersten Trittflächengröße TFG1 und jeweils zweite Pflastersteine z.B. a3, b3 mit einer zweiten Trittflächengrößen TFG2. Weiterhin umfassen die Ursprungssteinlagen 102, 103 noch Pflastersteine z.B. a4, b4 mit einer dritten Trittflächengröße TFG3. Hierbei unterscheiden sich die Pflastersteine P der Ursprungssteinlagen 102 des ersten Typs 106 und die Pflastersteine P der Ursprungssteinlagen 103 des zweiten Typs 107 bezüglich ihrer Trittflächenfarbe TFF1, TFF2 voneinander. Die unterschiedlichen Farben sind durch unterschiedliche Schraffuren schematisch angedeutet. Gemäß nicht dargestellter Ausführungsvarianten ist es auch vorgesehen, dass diese sich bezüglich ihrer Trittflächenstruktur voneinander unterscheiden oder dass diese sich bezüglich ihrer Trittflächenfarbe und ihrer Trittflächenstruktur voneinander unterscheiden. Der Manipulator M wird entsprechend einem Umsetz- und Musterbildungsauftrag von einem Umsetz- und Musterbildungsprogramm derart gesteuert, dass von seinem Greifer GM in dem Zugriffsbereich 108 nacheinander sämtliche Pflastersteine P der aktuell bereitgestellten Ursprungssteinlagen 102, 103 einzeln oder zu mehreren entnommen werden und auf einer ebenfalls in dem Zugriffsbereich 108 des Manipulators M liegenden Ablagefläche ABF einzeln oder zu mehreren abgesetzt werden und hierbei durch eine individuelle Positionierung zu den Fertigsteinlagen 104, 105 eines ersten Musters MU101, bei welchem die Fertigsteinlage 104, 105 in jeder Steinreihe A bis H Pflastersteinen P aus wenigstes zwei Typen 106, 107 von Ursprungssteinlagen 102, 103 umfasst, zusammensetzt werden. Dies erfolgt derart, dass jede Fertigsteinlage 104, 105 unabhängig von ihrem Muster aus Pflastersteinen P von zwei Typen 106, 107 von Ursprungssteinlagen 102, 103 hergestellt wird.

Die einzelnen Pflastersteine P der dargestellten Ursprungsteinlagen 102, 103 sind über ein Koordinatensystem jeweils durch den Reihen zugeordnete Kleinbuchstaben a bis h und den Spalten zugeordnete Zahlen 1 bis 3 benannt. Die einzelnen Pflastersteine P der dargestellten Fertigsteinlagen 104, 105 sind über ein Koordinatensystem jeweils durch den Reihen zugeordnete Großbuchstaben A bis H und den Spalten zugeordnete Zahlen 1 bis 3 benannt.

Das Musterbildungsprogramm zur Bildung der oberen Fertigsteinlage 104 läuft zum Beispiel wie folgt ab:
a1 nach I1; a4 nach I4; a2 nach J2; a3 nach J3; b3 nach K3; b4 nach K4; b1 nach L1; b2 nach L2 und e2 nach I2; e3 nach I3; e1 nach N1; e4 nach N4; f1 nach K1; f2 nach K2; f3 nach L3; f4 nach L4.

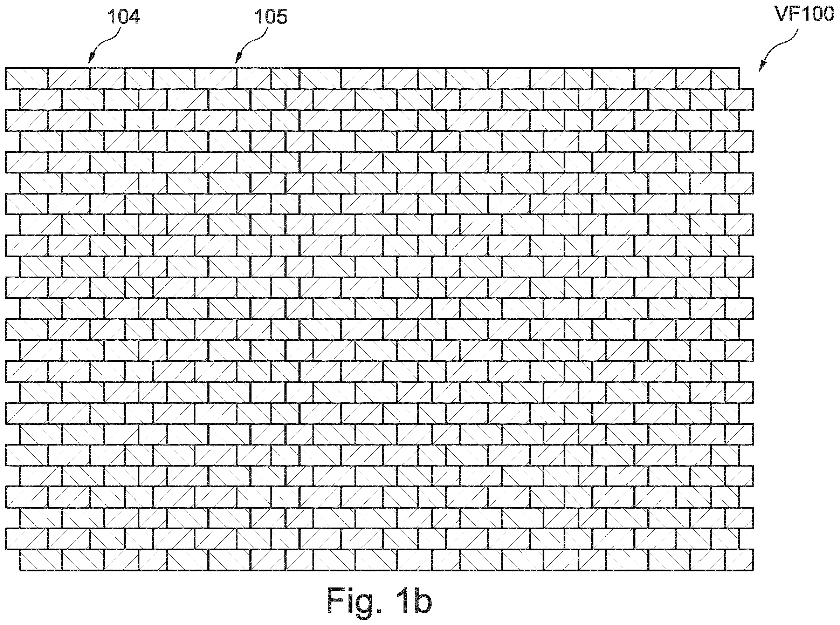

In der Figur 1b ist in Draufsicht eine Verlegefläche VF100 gezeigt, die aus einer Vielzahl von Fertigsteinlagen 104, 105 erstellt ist.

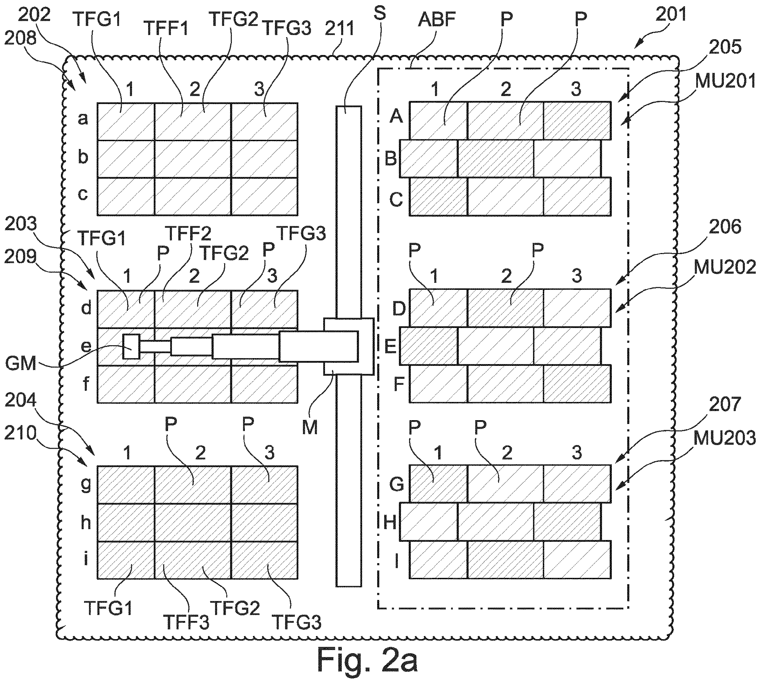

Die Figur 2a zeigt in abstrakter Darstellung ein zweites Musterbildungsverfahren 201. Auf der linken Seite der Figur 2a sind drei maschinell produzierte Ursprungssteinlagen 202, 203, 204 gezeigt. Pflastersteine P aus diesen maschinell produzierten Ursprungsteinlagen 202, 203, 204 werden zu auf der rechten Seite der Figur 2a gezeigten, maschinell verlegbaren Fertigsteinlagen 205, 206, 207 umgesetzt. Diese Umsetzarbeit wird durch einen schematisch dargestellten Manipulator M ausgeführt. Als Ursprungssteinlagen 202, 203, 204 werden zur Herstellung einer Vielzahl von Fertigsteinlagen 205, 206, 207 nacheinander mehrere Ursprungssteinlagen 202 eines ersten Typs 208 und nacheinander mehrere Ursprungssteinlagen 203 eines zweiten Typs 209 und nacheinander mehrere Ursprungssteinlagen 204 eines dritten Typs 210 in einen Zugriffsbereich 211 des Manipulators M gebracht. Jede der Ursprungssteinlagen 202, 203, 204 umfasst jeweils erste Pflastersteine a1, b1, c1 bzw. d1, e1, f1 bzw. g1, h1, i1 mit einer ersten Trittflächengröße TFG1 und jeweils zweite Pflastersteine a2, b2, c2 bzw. d2, e2, f2 bzw. g2, h2, i2 mit einer zweiten Trittflächengröße TFG2 und jeweils dritte Pflastersteine a3, b3, c3 bzw. d3, e3, f3 bzw. g3, h3, i3 mit einer dritten Trittflächengröße TFG3. Hierbei unterscheiden sich die Pflastersteine P der Ursprungssteinlagen 202 des ersten Typs 208 und die Pflastersteine P der Ursprungssteinlagen 203 des zweiten Typs 209 und die Pflastersteine P der Ursprungssteinlagen 204 des dritten Typs 210 bezüglich ihrer Trittflächenfarbe TFF1, TFF2, TFF3 voneinander. Die unterschiedlichen Farben sind durch unterschiedliche Schraffuren schematisch angedeutet. Gemäß nicht dargestellter Ausführungsvarianten ist es auch vorgesehen, dass diese sich bezüglich ihrer Trittflächenstruktur voneinander unterscheiden oder dass diese sich bezüglich ihrer Trittflächenfarbe und ihrer Trittflächenstruktur voneinander unterscheiden. Der Manipulator M wird entsprechend einem Umsetz- und Musterbildungsauftrag von einem Umsetz- und Musterbildungsprogramm derart gesteuert, dass von seinem Greifer GM in dem Zugriffsbereich 211 nacheinander sämtliche Pflastersteine P der aktuell bereitgestellten Ursprungssteinlagen 202, 203, 204 einzeln oder zu mehreren entnommen werden und auf einer ebenfalls in dem Zugriffsbereich 211 des Manipulators M liegenden Ablagefläche ABF einzeln oder zu mehreren abgesetzt werden und hierbei durch eine individuelle Positionierung zu den Fertigsteinlagen 205, 206, 207 eines ersten Musters MU201, eines zweiten Musters MU202 und eines dritten Musters MU203 zusammengesetzt werden, wobei jede Fertigsteinlage 205, 206, 207 in jeder Steinreihe A bis I Pflastersteinen P aus allen drei Typen 208, 209, 210 von Ursprungssteinlagen 202, 203, 204 umfasst. Dies erfolgt derart, dass jede Fertigsteinlage 205, 206, 207 unabhängig von ihrem Muster aus Pflastersteinen P von drei Typen 208, 209, 210 von Ursprungssteinlagen 202, 203, 204 hergestellt wird. Der Manipulator M ist auf einer Schiene S verfahrbar.

Die einzelnen Pflastersteine P der dargestellten Ursprungsteinlagen 202, 203, 204 sind über ein Koordinatensystem jeweils durch den Reihen zugeordnete Kleinbuchstaben a bis i und den Spalten zugeordnete Zahlen 1 bis 3 benannt. Die einzelnen Pflastersteine P der dargestellten Fertigsteinlagen 205, 206, 207 sind über ein Koordinatensystem jeweils durch den Reihen zugeordnete Großbuchstaben A bis I und den Spalten zugeordnete Zahlen 1 bis 3 benannt.

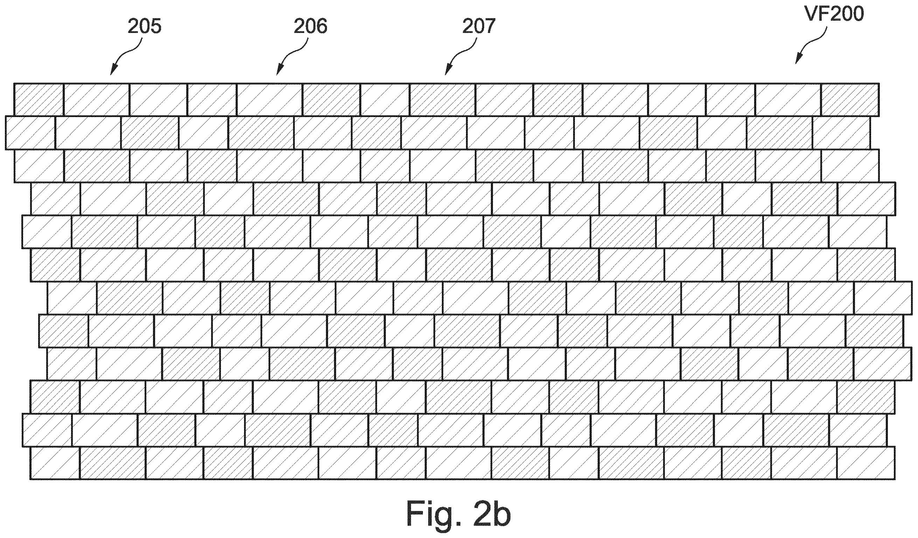

In der Figur 2b ist in Draufsicht eine Verlegefläche VF200 gezeigt, die aus einer Vielzahl von Fertigsteinlagen 205, 206, 207 erstellt ist.

### Bezugszeichenliste:

- 101: Musterbildungsverfahren
- 102, 103: Ursprungssteinlage
- 104, 105: Fertigsteinlage
- 106: erster Typ von Ursprungssteinlagen
- 107: zweiter Typ von Ursprungssteinlagen
- 108: Zugriffsbereich von M
- 201: Musterbildungsverfahren
- 202, 203, 204: Ursprungssteinlage
- 205, 206, 207: Fertigsteinlage
- 208: erster Typ von Ursprungssteinlagen
- 209: zweiter Typ von Ursprungssteinlagen
- 210: dritter Typ von Ursprungssteinlagen
- 211: Zugriffsbereich von M
- 1 bis 3: Spalte
- a bis r: Reihe bzw. Steinreihe
- A bis R: Reihe bzw. Steinreihe
- ABF: Ablagefläche
- GM: Greifer von M
- M: Manipulator
- MU101: erstes Muster
- MU201, MU202, MU203: erstes bis drittes Muster
- P: Pflasterstein
- S: Schiene
- TFF1, TFF2, TFF3: erste, zweite Trittflächenfarbe
- TFG1, TFG2, TFG3: erste bis dritte Trittflächengröße
- VF100: Verlegefläche
- VF200: Verlegefläche

## Patentansprüche

1. Musterbildungsverfahren (101; 201), durch welches Pflastersteine (P) aus maschinell produzierten Ursprungsteinlagen (102, 103; 202, 203, 204) zu maschinell verlegbaren Fertigsteinlagen (104, 105; 205, 206, 207) umgesetzt werden,
- wobei als Ursprungssteinlagen (102, 103; 202, 203, 204) nacheinander mehrere Ursprungssteinlagen (102; 202) eines ersten Typs (106; 208) und nacheinander mehrere Ursprungssteinlagen (103; 203) eines zweiten Typs (107; 209) oder nacheinander mehrere Ursprungssteinlagen (102; 202) eines ersten Typs (106; 208) und nacheinander mehrere Ursprungssteinlagen (103; 203) eines zweiten Typs (107; 209) und nacheinander mehrere Ursprungssteinlagen (204) eines dritten Typs (210) in einen Zugriffsbereich (108; 211) eines Manipulators (M) gebracht werden,
- wobei jede Ursprungssteinlage (102, 103; 202, 203, 204) jeweils erste Pflastersteine (P) mit einer ersten Trittflächengröße (TFG1) und jeweils zweite Pflastersteine (P) mit einer zweiten Trittflächengrößen (TFG2) umfasst,
- wobei sich die Pflastersteine (P) der Ursprungssteinlagen (102; 202) des ersten Typs (106; 208) und die Pflastersteine (P) der Ursprungssteinlagen (103; 203) des zweiten Typs (107; 209) bezüglich ihrer Trittflächenstruktur und/oder bezüglich ihrer Trittflächenfarbe (TFF1, TFF2) voneinander unterscheiden oder wobei sich die Pflastersteine (P) der Ursprungssteinlagen (102; 202) des ersten Typs (106; 208) und die Pflastersteine (P) der Ursprungssteinlagen (103; 203) des zweiten Typs (107; 209) und die Pflastersteine (P) der Ursprungssteinlagen (204) des dritten Typs (210) sich bezüglich ihrer Trittflächenstruktur und/oder bezüglich ihrer Trittflächenfarbe (TFF1, TFF2, TFF3) voneinander unterscheiden,
- wobei der Manipulator (M) entsprechend einem Umsetz- und Musterbildungsauftrag von einem Umsetz- und Musterbildungsprogramm derart gesteuert wird, dass von seinem Greifer (GM) in dem Zugriffsbereich (108; 211) nacheinander sämtliche Pflastersteine (P) der Ursprungssteinlagen (102, 103; 202, 203, 204) einzeln oder zu mehreren entnommen werden und auf einer ebenfalls in dem Zugriffsbereich (108; 211) des Manipulators (M) liegenden Ablagefläche (ABF) einzeln oder zu mehreren abgesetzt werden und zu Fertigsteinlagen (104, 105; 205) eines ersten Musters (MU101), bei welchem die Fertigsteinlage (104, 105; 205) in jeder Steinreihe (A-D; A-F) Pflastersteine (P) aus wenigstes zwei Ursprungssteinlagen (102, 103; 202, 203, 204) umfasst, oder Fertigsteinlagen eines ersten Musters (MU201) und eines zweiten Musters (MU202), bei welchen die Fertigsteinlagen (205, 206, 207) jeweils in jeder Steinreihe Pflastersteine aus wenigstens zwei Ursprungssteinlagen (202, 203, 204) umfassen, oder zu Fertigsteinlagen (205, 206, 207) eines ersten Musters (MU201) und eines zweiten Musters (MU202) und eines dritten Musters (MU203) zusammensetzt werden,
- wobei dies derart erfolgt, dass jede Fertigsteinlage (104, 105; 205, 206, 207) unabhängig von ihrem Muster (MU101; MU201, MU202, MU203) aus Pflastersteinen (P) von zwei oder drei Typen (106, 107; 208, 209, 210) von Ursprungssteinlagen (102, 103; 202, 203, 204) hergestellt wird.

2. Musterbildungsverfahren nach Anspruch 1, **dadurch gekennzeichnet, dass** alle Fertigsteinlagen (104, 105; 205, 206, 207) mit derselben Parkettierung hergestellt werden.

3. Musterbildungsverfahren nach Anspruch 1, **dadurch gekennzeichnet, dass** das Musterbildungsverfahren (201) derart ausgeführt wird, dass eine ganzzahlige Zahl von wenigstens drei und maximal zehn Fertigsteinlagen (205, 206, 207) aus einem ganzzahligen Vielfachen von Ursprungssteinlagen (202) des ersten Typs (208) und einem ganzzahligen Vielfachen von Ursprungssteinlagen (203) des zweiten Typs (209) und ganzzahligen Vielfachen von Ursprungssteinlagen (204) des dritten Typs (210) gebildet wird.

4. Musterbildungsverfahren nach Anspruch 1 oder 2 oder 3, **dadurch gekennzeichnet, dass** die Fertigsteinlagen (205, 206, 207) nach ihrer Erzeugung derart aufeinander gestapelt werden, dass von dem Manipulator (M) oder einer Stapeleinrichtung auf eine Fertigsteinlage (205) des ersten Musters (MU201) eine Fertigsteinlage (206) des zweiten Musters (MU202) oder eine Fertigsteinlage (207) des dritten Musters (MU203) gelegt wird.

5. Musterbildungsverfahren nach Anspruch 1 oder 2 oder 3, **dadurch gekennzeichnet, dass** die Fertigsteinlagen (205, 206, 207) nach ihrer Erzeugung derart aufeinander gestapelt werden, dass von dem Manipulator (M) oder einer Stapeleinrichtung auf eine Fertigsteinlage (205) des ersten Musters (MU201) eine Fertigsteinlage (206) des zweiten Musters (MU202) gelegt wird und dass auf die Fertigsteinlage (206) des zweiten Musters (MU202) eine Fertigsteinlage (207) des dritten Musters (MU203) gelegt wird und dass es insbesondere vorgesehen ist, dass dieser Vorgang wenigstens einmal wiederholt wird.

6. Musterbildungsverfahren nach Anspruch 1 oder 2 oder 3, **dadurch gekennzeichnet, dass** die Fertigsteinlagen (104, 105; 205, 206, 207) von dem Manipulator (M) derart in mehreren Lagen auf der Ablagefläche (ABF) abgelegt werden, dass diese parallel oder nacheinander zu Fertigsteinlagen (104, 105; 202) eines ersten Musters (MU101; MU201) oder Fertigsteinlagen (202, 203) eines ersten und zweiten Musters (MU201, MU202) oder zu Fertigsteinlagen (205, 206, 207) eines ersten und zweiten und dritten Musters (MU201, MU202, MU203) zusammensetzt werden.

7. Musterbildungsverfahren nach wenigstens einem der vorhergehenden Ansprüche, **dadurch gekennzeichnet, dass** die Ursprungssteinlagen (102, 103; 202, 203, 204) jeweils entweder als Stapel oder als Einzellagen in den Zugriffsbereich (108; 211) des Manipulators (M) gebracht werden.

8. Musterbildungsverfahren der vorhergehenden Ansprüche, **dadurch gekennzeichnet, dass** alle Ursprungssteinlagen (102, 103; 202, 203, 204) hinsichtlich ihrer Parkettierung gleich hergestellt sind.

9. Musterbildungsverfahren nach wenigstens einem der vorhergehenden Ansprüche, **dadurch gekennzeichnet, dass** als Ursprungssteinlagen (102, 103; 202, 203, 204) des ersten Typs (106; 208) und des zweiten Typs (107; 209) und des dritten Typs (210) Ursprungssteinlagen (102, 103; 202, 203, 204) verarbeitet werden, welche sich hinsichtlich ihrer Parkettierung unterscheiden.

10. Musterbildungsverfahren nach wenigstens einem der vorhergehenden Ansprüche, **dadurch gekennzeichnet, dass** die Ablagefläche (ABF) zusammen mit einem Sockel des Manipulators (M) bewegt wird.

11. Musterbildungsverfahren nach wenigstens einem der vorhergehenden Ansprüche, **dadurch gekennzeichnet, dass** als weitere Ursprungssteinlagen nacheinander jeweils mehrere Ursprungssteinlagen eines vierten Typs oder eines vierten und fünften Typs oder eines vierten, fünften und sechsten Typs oder eines vierten, fünften, sechsten und siebten Typs oder von mehr als sieben Typen in den Zugriffsbereich (108; 211) des Manipulators (M) gebracht werden.

12. Musterbildungsverfahren nach Anspruch 11, **dadurch gekennzeichnet, dass** alle Ursprungssteinlagen (102, 103; 202, 203, 204) jeweils Pflastersteine (P) unterschiedlicher Trittflächengrößen (TFG1, TFG2, TFG3) umfassen, wobei sich die Pflastersteine (P) der Ursprungssteinlagen (102, 103; 202, 203, 204) aller Typen (106, 107; 208, 209, 210) bezüglich ihrer Trittflächenstruktur und/oder bezüglich ihrer Trittflächenfarbe (TFF1, TFF2, TFF3) voneinander unterscheiden.
